# EUROPÄISCHE PATENTSCHRIFT

(11) **EP 2 002 676 B1**
(45) Veröffentlichungstag und Bekanntmachung des Hinweises auf die Patenterteilung: **12.06.2013**
(21) Anmeldenummer: 07724011.7
(22) Anmeldetag: 04.04.2007
(51) Int. Cl.: H04W 4/02, H04W 4/24, H04W 8/18

(54) **KOMMUNIKATIONSSYSTEM ZUR BEREITSTELLUNG STANDORTABHÄNGIGER DIENSTE MIT NETZWERKEVOLUTIONSRESISTENTER ZONENDEFINITION**
COMMUNICATION SYSTEM FOR PROVISION OF LOCATION-DEPENDENT SERVICES WITH NETWORK-EVOLUTION-RESISTANT ZONE DEFINITION
SYSTEME DE COMMUNICATION POUR LA MISE A DISPOSITION DE SERVICES GEODEPENDANTS AVEC DEFINITION DE ZONES RESISTANT A L'EVOLUTION DE RESEAU

(30) Priorität: 05.04.2006 DE 102006015988
(43) Veröffentlichungstag der Anmeldung: 17.12.2008
(73) Patentinhaber: Telefónica Germany GmbH & Co. OHG, 80992 München (DE)
(72) Erfinder: BERGER, Achim, 85084 Reichertshofen (DE); MARSDEN, Roger, 53639 Königswinter (DE)
(74) Vertreter: Herrmann, Uwe
(86) Internationale Anmeldenummer: PCT/EP2007/003070
(87) Internationale Veröffentlichungsnummer: WO 2007/115777

(56) Entgegenhaltungen:
- EP-A- 1 737 257
- WO-A-01/17308
- WO-A-99/20064
- DE-C1- 19 731 461
- US-A1- 2003 119 501
- US-B1- 6 334 052

## Beschreibung

Die vorliegende Erfindung betrifft ein Kommunikationssystem zum Bereitstellen von Dienst an die Nutzer des Kommunikationssystems mittels eines Luftschnittstellenmediums in einem geographischen Gebiet, wobei das Kommunikationssystem Netzknoten und Endgeräte umfasst, wobei die Netzknoten dem geographischen Gebiet Strahlung liefern und die Luftschnittstelle für die Endgeräte bereitstellen, wobei mindestens einige der Endgeräte einen Speicher umfassen, der eine Definition mindestens einer Zone speichert, die Teil des geographischen Gebiets ist und in der dem Nutzer eine standortabhängige Vergebührung und/oder standortabhängige Dienste geboten werden, die sich von der Vergebührung und/oder Diensten außerhalb der Zone unterscheidet/unterscheiden.

Wie aus dem Stand der Technik bekannt ist, können Betreiber, die Dienst über ein Luftschnittstellenmedium (das Netz) bieten, z.B. GSM, UMTS, WLAN, bieten, ihren Endnutzern abhängig von deren Standort eine Differenzierung des Dienstes und der Vergebührung bieten. Eine oder mehrere Zonen können individuell für die Endnutzer oder identisch für alle Nutzer festgelegt werden, in denen bestimmte, zusätzliche oder verbesserte Dienste oder eine andere Vergebührung als außerhalb der Zone geboten wird. Die Zone ist durch ein übermitteltes geographisches Gebiet physisch festgelegt, das Teil eines gesamten geographischen Gebiets ist, das von dem Netz versorgt wird. Netzknoten liefern die Netzschnittstelle an das übermittelte geographische Gebiet und somit die Schnittstelle für die Endgeräte der Nutzer des Kommunikationssystems.

Der Nutzer kann entweder durch eine deutliche Anzeige (visuell oder akustisch) und/oder durch Differenzierung der Vergebührung und/oder durch Differenzierung der Wahrnehmung, z.B. höherer Durchsatz, privilegiertes Dienstangebot, etc. des Aufenthalts innerhalb einer Zone gewahr sein.

Wie weiterhin aus dem Stand der Technik bekannt ist, ist es möglich, eine gespeicherte Definition der Zone lokal am Endnutzer-Endgerät zu verwalten. Bei einer vorgegebenen festgelegten Zone ändern sich aber die geltenden Grenzen zwangsweise im Laufe der Zeit aufgrund späterer topologischer Änderungen der Netzknoteninfrastruktur, d.h. Neueinführung, Neugruppierung oder physisches Entfernen. Ein charakteristisches Problem, das bei solchen Zonen auftritt, ist, dass der Betreiber im zeitlichen Verlauf ständig rechtzeitig die Zone zu dem betroffenen Nutzer-Endgerät neu beurteilen und neu synchronisieren muss.

Aus der WO 01/17308 A1 ist ein Kommunikationssystem bekannt, das einzelne Zonen innerhalb eines Kommunikationssystems definiert, wobei die Definition einer Zone einen oder mehrere Platzhalter umfasst, die für zwei oder mehr verschiedene Werte stehen.

Eine Aufgabe der vorliegenden Erfindung besteht darin, die Definition der Zone so zu speichern, dass so selten wie möglich eine Aktualisierung erforderlich ist. Eine weitere Aufgabe der Erfindung besteht darin, eine korrekte Synchronisierung der in den Endgeräten gespeicherten Zonendefinition aufrechtzuerhalten.

Die Aufgabe wird durch ein Kommunikationssystem nach Anspruch 1 gelöst. Erfindungsgemäß umfasst die Definition der Zone einen oder mehrere Platzhalter, die für zwei oder mehr als zwei verschiedene Werte stehen. Wenn zum Beispiel einem die Zone versorgenden Netzknoten eine neue Netzknotenkennung zugewiesen wird, die sich von der früheren Kennung nur in einer oder in einigen Stellen unterscheidet, die als Platzhalter gespeichert sind, ist es dementsprechend nicht erforderlich, dem Nutzer eine Aktualisierung zu liefern, da die gespeicherte Information noch gültig ist. Das gleiche gilt für andere Änderungen des Netzes, zum Beispiel eine Änderung einer Netzgruppen-Bezugsnummer, z.B. einer Kennzahl des Aufenthaltsbereichs (engl. Location Area Code).

Erfindungsgemäß umfasst das System ein Aktualisierungsmittel, das zum bedarfsweisen Aktualisieren der Definition einer Zone ausgelegt ist, die in dem Endgerät gespeichert ist. Wenn also eine Aktualisierung erforderlich ist, ist das Aktualisierungsmittel dafür ausgelegt, diese Aktualisierung ohne Notwendigkeit der Änderung des Endgeräts oder der darin enthaltenen SIM- bzw. UICC-Karte vorzunehmen.

In einer bevorzugten Ausführung der Erfindung sind die Netzknoten basierend auf Nähe, die als Netzknotengruppe definiert ist, Gruppen von Netzknoten zugeordnet, wobei mindestens einigen der Netzknotengruppen eine Netzknotengruppen-Bezugsnummer zugewiesen ist und wobei die Definition einer Zone, die in dem Endgerät gespeichert ist, ein oder mehrere Netzknotengruppen-Bezugsnummern umfasst, wobei mindestens einige der Stellen der Netzknotengruppen-Bezugsnummern durch Platzhalter ersetzt sind.

In einer weiteren Ausführung der vorliegenden Erfindung ist mindestens einigen der Netzknoten eine Netzknotenkennung zugewiesen, wobei die Definition einer Zone eine oder mehrere Netzknotenkennungen umfasst und mindestens einige der Stellen der Netzknotenkennungen durch Platzhalter ersetzt sind.

Denkbar ist weiterhin, dass die Definition einer Zone eine oder mehrere Netzknotengruppen-Bezugsnummern sowie eine oder mehrere Netzknotenkennungen umfasst, wobei eines oder beides der Netzknotengruppen-Bezugsnummern und der Netzknotenkennungen eine oder mehrere Stellen umfasst, die durch Platzhalter ersetzt sind.

Ein Nummerierungsschema für die Netzknoten kann wie folgt festgelegt werden:

Alle Netzknoten in dem Netz werden anhand von Nähe in eindeutige zugeordnete Gruppen von Netzknoten gruppiert, z.B. standardisiert als Kennzahl des Aufenthaltbereichs in GSM oder UMTS. Wie vorstehend erläutert wird dies als die Netzknotengruppe bezeichnet.

Jeder Netzknotengruppe wird eine eindeutige Netzknotengruppen-Bezugsnummer zugeordnet. Vorzugsweise ist das Netzknotengruppen-Nummerierungsschema so geartet, dass direkt benachbarte Netzknotengruppen gemeinsame Stellen in der Netzknotengruppen-Bezugsnummer verwenden, wie durch eine vorab entwickelte Nummerierungsgepflogenheit festgelegt wird.

Zusätzlich wird jedem Netzknoten - wie vorstehend erwähnt - vorzugsweise eine eindeutige Netzknotenkennung zugeordnet, der eine Bezugsnummer ist, die den Netzknoten kenntlich macht.

Eine Eigenschaft des Netzknotengruppen-Nummerierungsschemas ist, dass durch Kenntnis der von benachbarten Netzknotengruppen eines bestimmten Gebiets gemeinsam verwendeten Stellen eine Platzhalterzuweisung bei den nicht gemeinsamen Stellen dazu führen kann, dass benachbarte Netzknotengruppen-Nummern als identisch eingestuft werden. Wenn zum Beispiel zwei benachbarten Netzknotengruppen die Kennungen "12388" und "12399" in dem Wissen zugewiesen wurden, dass ihnen in diesem Gebiet die ersten drei Stellen der Kennung gemeinsam zueigen sind, können die beiden letzten Stellen als Platzhalter behandelt werden, also "123**".

Wenn somit ein Netzknoten von einer Netzknotengruppe zu einer benachbarten Netzknotengruppe mit dem vorherigen Wissen der Platzhaltergepflogenheit in dem Gebiet neu zugeordnet wurde, würde eine Anwendung, die die Netzknotenkennung liest, beide Kennungen für identisch halten.

Wie weiterhin vorstehend erläutert wurde, umfasst die Netzknotenkennung ferner vorzugsweise Stellen, die innerhalb der Netzknotengruppe den physischen Funknetzsender des jeweiligen Netzknotens eindeutig bezeichnen, z.B. umfassen diese Stellen standardisiert in GSM die Zellenkennung und standardisiert in UMTS die Kennzahl des Versorgungsbereichs. In einer bevorzugten Ausführung der Erfindung nutzen physische Sender, die den gleichen physischen Standort nutzen, z.B. einen Funkmast, gemeinsame Stellen in der Netzknotenkennung gemäß Definition durch eine vorab entwickelte Nummerierungsgepflogenheit.

Eine Eigenschaft dieses Netzknotenkennungs-Nummerierungsschemas, das eine bevorzugte Ausführung der vorliegenden Erfindung ist, ist, dass durch Kenntnis der gemeinsamen physischen Senderstellengepflogenheit in einer jeweiligen Netzknotengruppe eine Platzhalterzuweisung bei den nicht gemeinsamen Stellen dazu führen kann, dass mehrere physische Sender, die sich am gleichen physischen Standort befinden, als identisch eingestuft werden. Sobald der erste Sender an diesem Standort eingerichtet wurde, würde somit mit dem vorherigen Wissen der Platzhaltergepflogenheit in dem Gebiet eine Anwendung, die die Netzknotenkennung liest, alle weiteren Sender für identisch halten.

Demnach haben gemäß einer weiteren erfindungsgemäßen Ausführung benachbarte Netzknotengruppen Netzknotengruppen-Bezugsnummern mit gemeinsamen Werten und nicht gemeinsamen Werten, wobei die Definition einer Zone eine oder mehrere Netzknotengruppen-Bezugsnummern umfasst, wobei die nicht gemeinsamen Werte der Netzknotengruppen-Bezugsnummern durch Platzhalter ersetzt werden.

Gemäß einer weiteren erfindungsgemäßen Ausführung weist die Netzknotenkennung Stellen auf, die einen physischen Funknetzsender des Netzknotens bezeichnen.

Netzknoten, denen der gleiche physische Funknetzsender zugeordnet ist, können Netzknotenkennungen mit gemeinsamen Werten, die den physischen Funknetzsender kennzeichnen, und mit nicht gemeinsamen Werten aufweisen, wobei die Definition einer Zone eine oder mehrere Netzknotenkennungen umfasst, wobei die nicht gemeinsamen Werte der Netzknotenkennungen durch Platzhalter ersetzt sind.

Zum Beispiel teilen sich drei Sender den gleichen physischen Standort (Mast) und ihnen sind die Kennungen "06789", "16789" und "26789" zugewiesen. In dem Wissen, dass in der bestimmten Netzknotengruppe den gemeinsam angeordneten Sendern die letzten vier Stellen gemeinsam zueigen sind, kann die erste Stelle als Platzhalter ausgelegt werden, nämlich "*6789".

Die charakteristischen Vorteile des vorstehend beschriebenen Nummerierungsschemas der Netzknotengruppe und der Netzknotenkennung sind also wie folgt:
(a) eine Neuzuweisung bestehender Netzknoten zu benachbarten Netzknoten erfordert keine Aktualisierung einer Anwendung (Datenbank), die die Netzknotenkennung liest, um Zugehörigkeit zu einer Zone zu ermitteln; daher können sowohl neue als auch alte Netzknotenkennungen, die den gleichen physischen Netzknoten betreffen, einer Anwendung bekannt sein, ohne einen Konflikt hervorzurufen,
(b) die Implementierung neuer Netzknoten-Sender, die gemeinsam mit bestehenden Sendern angeordnet oder diesen zugeordnet sind, erfordert keine Aktualisierung einer Anwendung (Datenbank), die die Netzknotenkennung liest, um Zugehörigkeit zu einer Zone zu ermitteln,
(c) die Notwendigkeit einer Synchronisierung bezüglich der Entwicklung der Netzknotentopologie wird minimiert, da bestehende Netzknoten einem systematischen Nummerierungsschema unterliegen, das basierend auf der früheren Nummerierung dieses Netzknotens Vererbung einbindet, und wird minimiert, da eine neue oder künftige Netzknotennummerierung ebenfalls einem systematischen Nummerierungsschema unterliegt, das vorab festgelegte Nummerierungseigenschaften von bereits eingerichteten Knoten in diesem Gebiet erbt,
(d) weiterhin wird die Anzahl an Bytes, die zur Beschreibung der Netzknoten einer vorgegebenen Zone erforderlich sind, durch die Verwendung von "Platzhaltern", die dem Nummerierungsschema zueigen ist, auf verlustfreie komprimierende Weise minimiert.

Gemäß einem weiteren Beispiel wird ermittelt, dass vier Netzknoten, die durch die folgenden Netzknotengruppen-Bezugsnummern und Netzknotenkennungen: 12388 06789", "12388 16789", 12388 26789", "12399 36789" charakterisiert sind, eine Teilnehmerzone versorgen. Wenn die letzten beiden Stellen der Netzknotengruppen-Bezugsnummer und die erste Stelle der Netzknotenkennung nach Nummerierungsgepflogenheit Platzhalter sind, dann kann der ganze Satz eindeutig durch "123** *6789" beschrieben werden. Dieser letzte Ausdruck kann als "optimierte Standort-Kennzahl" definiert werden, die zum Beispiel in dem Speicher des Endgeräts als Zonendefinition gespeichert werden kann.

Im Allgemeinen kann der Speicher in dem Endgerät oder in der darin enthaltenen Karte (SIM oder UICC) angeordnet sein.

Gemäß einer weiteren erfindungsgemäßen Ausführung umfasst das System eine erste Datenbank, die ein physisches Standortattribut aller im Netz residenten Netzknoten verwaltet, das dem Nutzer zusammen mit der zugehörigen Netzknotenkennung angeboten wird. Weiterhin kann eine erste Verarbeitungsvorrichtung vorgesehen werden, die dafür ausgelegt ist, alle Netzknoten zu identifizieren, die als die Zone versorgend gelten.

Gemäß einer weiteren erfindungsgemäßen Ausführung umfasst das System eine zweite Verarbeitungsvorrichtung, die dafür ausgelegt ist, eine Liste aller Netzknoten, die durch Verwendung der ersten Verarbeitungsvorrichtung identifiziert wurden, zu verschlüsseln und den Netzknotenkennungen und/oder den Netzknotengruppen-Bezugsnummern Platzhalter zuzuweisen. Gemäß einer weiteren erfindungsgemäßen Ausführung kann die zweite Verarbeitungsvorrichtung dafür ausgelegt sein, (infolge ihres Betriebs) eine - vorstehend erläuterte - optimierte Standort-Kennzahl an die Hand zu geben, die Platzhalter für nicht gemeinsame Stellen sowie die Werte gemeinsamer Stellen der Netzknotenkennungen und/oder der Netzknotengruppen-Bezugsnummern der Netzknoten umfasst, die als die Zone versorgend eingestuft werden.

Gemäß einer weiteren erfindungsgemäßen Ausführung ist eine zweite Datenbank enthalten, die eine Definition der Zone(n) für die Nutzer des Systems enthält.

Weiterhin kann das System eine Auslösevorrichtung umfassen, die dafür ausgelegt ist, die zweite Verarbeitungsvorrichtung zu nutzen, um die Zone(n) für die Nutzer des Systems vorzugsweise jedes Mal neu zu beurteilen, wenn eine Änderung der Netzknotentopologie vorgenommen wird.

Das System umfasst vorzugsweise vergleichende Mittel, die dafür ausgelegt sind, die gespeicherte Definition einer Zone, die tatsächlich in dem Endgerät gespeichert ist, mit der neu bewerteten Definition einer Zone zu vergleichen, die von der zweiten Verarbeitungsvorrichtung bereitgestellt wird. Die vergleichenden Mittel könnten mit der oben erwähnten Auslösevorrichtung identisch sein. Das Ergebnis des Vergleichs kann dazu genützt werden, festzustellen, welche Mitglieder der zweiten Datenbank eine Änderung der optimierten Standort-Kennzahl erfahren und somit einer Neusynchronisation bedürfen, und welche nicht. Wie vorstehend erläutert, wird hierfür ein Vergleich der Standort-Kennzahl vor und nach der Optimierung vorgenommen. Dies kann entweder durch Speichern der aktuellen und der vorherigen optimierten Standort-Kennzahl für jeden Endnutzer oder durch Berechnen eines aktuellen und vorherigen gegenüber entsprechenden Bildern der ersten Datenbank verwirklicht werden.

Das System kann mit Mitteln zum Setzen einer Aktualisierungsflagge für die Mitglieder der zweiten Datenbank versehen werden, bei denen der Vergleich einen Unterschied zwischen der gespeicherten Definition einer Zone und der von der zweiten Verarbeitungsvorrichtung vorgesehenen neu beurteilten Definition einer Zone aufdeckte. Demnach kann eine Aktualisierungsflagge bei den betroffenen Endnutzermitgliedern der zweiten Datenbank gesetzt werden.

Das erfindungsgemäße Aktualisierungsmittel ist dafür ausgelegt, die zweite Datenbank bei einer vorab festgelegten Häufigkeit zu durchlaufen und den Endgeräten der Endnutzer, die durch das Mittel zum Setzen einer Aktualisierungsflagge markiert sind, unaufgeforderte Aktualisierungen zu senden. Diese regelmäßige Aktualisierung soll so konfigurierbar sein, dass sie einen Endnutzer mit maximaler Häufigkeit in einem vorgegebenen Zeitraum anspricht.

Es ist möglich, die optimierte Standort-Kennzahl, d.h. das Ergebnis der Neubeurteilung, über ein bestimmtes Trägermedium, das vorab als das für den Endnutzer geeigneteste festgelegt wurde, z.B. SMS, GPRS, USSD, und das von dem Endgerät des Endnutzers angenommen und verarbeitet wird, zu übermitteln.

Als Alternative oder zusätzlich zur Aktualisierung bei einer vorab festgelegten Häufigkeit führt das Aktualisierungsmittel erfindungsgemäß eine Echtzeit-Aktualisierung aus. In diesem Fall wird die Aktivität des Endnutzers, der von dem Mittel zum Setzen einer Aktualisierungsflagge markiert ist, geprüft. Die Mittel sind dafür ausgelegt, eine Aktivität des Endnutzers zu erkennen und eine unaufgeforderte Aktualisierung an die Endnutzergeräte zu senden, die von dem Mittel zum Setzen einer Aktualisierungsflagge markiert wurden und diese Aktivität aufweisen.

Diese Aktivität kann das Empfangen oder Veranlassen eines Sprachrufs, einer Datensitzung oder eines Einschaltens des Endgeräts des Endnutzers umfassen. Das Aktualisierungsmittel sendet auch eine unaufgeforderte Aktualisierung an den Endnutzer, aber mit einer hohen Erfolgswahrscheinlichkeit aufgrund des bekannten, Echtzeit-Verfügungszustands des Endgeräts des Endnutzers.

Im Fall eines Scheitems, z.B. Netzüberlastung, plötzlicher Unerreichbarkeit, etc. hält die Echtzeitaktualisierung einen vorab festgelegten Neuversuch-Zeitraum ein.

In einer bevorzugten Ausführung ist das System dafür ausgelegt, die Zone(n) für die Nutzer des Systems zu dem Zeitpunkt, da eine Aktualisierung an den Nutzer gesendet wird, neu zu beurteilen. Dies gewährleistet Richtigkeit. Es wird immer die vollständige Zonendefinition und kein Delta gesendet, um bei der Lieferkette an den Endnutzer Probleme mit der Reihenfolge des Eingangs oder der Sequentialisierung zu verhindern.

In einer bevorzugten Ausführung der Erfindung ist das Aktualisierungsmittel dafür ausgelegt, vorherige noch unerledigte Aktualisierungen zurückzurufen oder zu stornieren und diese durch die jüngste Aktualisierung zu ersetzen. Dies verbessert sowohl die Leistungsfähigkeit als auch die Dauer der absoluten Aktualisierungen sowie ferner den Eingangszeitpunkt der jüngsten Aktualisierung.

In einer weiteren Ausführung der Erfindung sind die Endgeräte dafür ausgelegt, den Empfang einer Aktualisierung zu bestätigen, wobei die Bestätigung dazu genutzt werden kann, die Aktualisierungsflagge für den Nutzer zurückzusetzen.

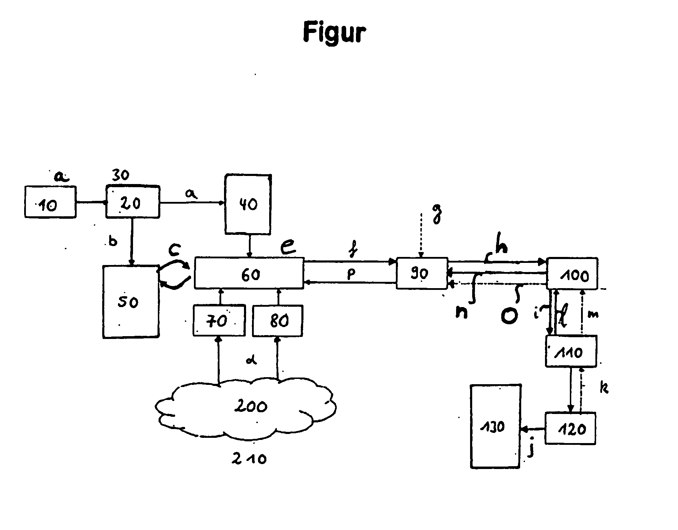

Weitere Vorteile der vorliegenden Erfindung werden anhand der Figur beschrieben, die eine beispielhafte Anwendung der Erfindung zeigt.

In der Figur bezeichnen die Bezugsziffern die folgenden Komponenten / Aktivitäten des Kommunikationssystems:
10: ACP
20: Massendatenaustausch
30: IN
40: Zellendatenbank
50: Teilnehmerdatenbank
60 ZUSOTAP
70: Sprachdienste
80: Datendienste
90: OTAP
100: SMSc
110: Endgerät; Handy oder Datenkarte/Verbindungsmanager
120: UICC
130: EF-Zellenliste
200: O₂ UMTS- oder GSM-Netz / andere Roaming-Netze
210: nodeB LAC und Zell-Nummerierungsgepflogenheiten:
   (i) verlustfreie Komprimierung der Zellliste OTA
   (ii) Toleranz bei Reparenting und Secorization (keine OTA-Aktualisierung)

a: neue / geänderte Zellen
b: von Flagge betroffene Zonen
c: IN-OTAP-Aktualisierung durch periodisches Durchlaufen auslösen
d: IN-OTAP-Aktualisierung durch Echtzeitverkehr auslösen
e: Zonen-Zellenliste verschlüsseln
f: neue Zellenliste senden (enthält alle Zonen)
g: HZ-Datenbit (falls abonniert)
h: neue Zellenliste senden (verkettete SMS); Zustellbenachrichtigung anfordern, Empfangsnachweis anfordern
i: neue Zellenliste senden (verkettete SMS)
j: neue Zellenliste
k: Antwort mit Empfangsnachweis
I: Zustellbenachrichtigung
m: Antwort mit Empfangsnachweis
n: Antwort mit Zustellnachweis
o: Antwort mit Empfangsnachweis
p: Zustellergebnis

Die Figur zeigt einen OTAP-/Kurznachrichten-Zustellträger und eine in dem Endgerät des Endanwenders residente Anwendung, die in Rücksprache mit einer in dem Netz (IN-Platform) arbeitenden sendenden Anwendung arbeiten, die auch für Vergebührung synchronisiert ist.

Ein Betreiber legt eine Zone für einen Teihehmer in seinem UMTS-Zugangsnetz fest, wobei die Zone eine oder mehrere nodeB-Funksender/-empfänger umfasst. Es ist ein Nummerierungsschema festgelegt, bei dem alle Aufenthaltsbereiche eine fünfstellige Zahl in dem Bereich 00000 bis einschließlich 65535 umfassen. Benachbarte Aufenthaltsbereiche für Regionen planende Betreiber behalten die wichtigsten drei Stellen des Aufenthaltsbereichs, die für benachbarte Aufenthaltsbereiche - bestehende wie auch künftige - gleich sind. Weiterhin ist ein Nummerierungsschema festgelegt, bei dem alle Zellenkennungen eine fünfstellige Zahl in dem Bereich von 00000 bis einschließlich 65535 umfassen. Versorgungsbereichcodes, die zu dem gleichen physischen nodeB gehören, die mehrere Sektoren mehrfacher Frequenzen umfassen können, werden sowohl für bestehende als auch für künftige Versorgungsbereiche so verwaltet, dass die unwichtigsten vier Stellen allen gemeinsam sind.

Wie in der Figur gezeigt wird, umfasst das System IN die erste Datenbank "Zellendatenbank" und die zweite Datenbank "Teilnehmerdatenbank". Die erste Datenbank verwaltet ein physisches Standortattribut aller Netzknoten, die in dem UMTS-Netz resident sind, das dem Nutzer zusammen mit der zugehörigen Netzknotenkennung angeboten wird. Die zweite Datenbank enthält eine Definition der Zonen für jeden Endnutzer des Netzes.

Beide Datenbanken werden auf einer intelligenten Netz-Plattform (IN) verwaltet. Eine separate automatische Zellversorgungsplattform (ACP, engl. Automatic Cell Provisioning Platform) sendet der IN alle Änderungen der Netz-nodeB-Topologie.

Eine Anwendung steuert erste und zweite Verarbeitungsvorrichtungen, die auch Teil des IN-Systems sind. Die erste Verarbeitungsvorrichtung ermittelt die Netzknoten, die eine Zone versorgen. Die zweite Verarbeitungsvorrichtung berechnet die optimierte Standort-Kennzahl, die als "kodierte Zonen-Zellenliste" bezeichnet wird, wenn sie durch eine Änderung der Topologie des Netzes ausgelöst wird. Nutzer, die eine Änderung ihrer optimierten Standort-Kennzahl erfahren, werden in der zweiten Datenbank markiert, um eine Aktualisierung auf ihren Endgeräten zu empfangen.

Diese Aktualisierung wird entweder durch ein periodisches Durchlaufen der zweiten Datenbank oder in Echtzeit vorgenommen, falls der Endnutzer, der in der zweiten Datenbank markiert ist, wie in der Figur dargestellt an einer leitungsvermittelten oder einer paketvermittelten Transaktion beteiligt ist. Eine vorab festgelegte Priorisierung einer Auslösung in Echtzeit gegenüber einer regelmäßigen Auslösung wird in Bezug auf verfügbare Kapazitätsbandbreite festgelegt.

Die IN umfasst ferner Aktualisierungsmittel zum Aktualisieren über eine Luftschnittstellenplattform (ZUSOTAP) zur Übermittlung der optimierten Standort-Kennzahl mittels SMS-Träger zum Endgerät des Endnutzers. Der Gültigkeitszeitraum der Kurznachricht wird durch das Aktualisierungsmittel entsprechend einer vorab festgelegten Gepflogenheit und nach Art des Auslösers eingestellt. Die Aktualisierungsmittelanwendung stellt sicher, dass diese Nachricht bei Erfolgen mehrerer Auslöser, während eine frühere Aktualisierung noch über OTAP abläuft, zurückgezogen und entsprechend ersetzt wird. Dies vermeidet negative Folgen, die sich aus Race-Bedingungen und out-of-sequence-Bedingungen ergeben.

Das Endgerät des Endnutzers umfasst eine UICC sowie einen Speicher, in dem eine elektronische Elementary-File-Zellliste (EF-Zellliste) gespeichert ist, die die Zone festlegt. Wie vorstehend erläutert umfasst die Zellliste einen oder mehrere Platzhalter. Wie in der Figur gezeigt wird die kodierte Zellliste zum Endgerät und vom Endgerät zur UICC gesendet, wo sie in einem geeigneten Speicher gespeichert wird.

Die von dem Aktualisierungsmittel stammende Aktualisierungsnachricht wird von dem Endgerät des Endnutzers separat an das Aktualisierungsmittel über SMSc und OTAP bestätigt, d.h. sowohl von der UMTS-SIM-Karte als auch von dem UMTS-Endgerät. Das Aktualisierungsmittel aktualisiert den Endnutzerstatus und die zweite Datenbank entsprechend der Rückmeldung.

## Patentansprüche

1. Kommunikationssystem zum Bereitstellen von Diensten an die Nutzer des Kommunikationssystems durch ein Luftschnittstellenmedium in einem geographischen Gebiet, wobei das Kommunikationssystem Netzknoten und Engeräte (110) umfasst, wobei die Netzknoten dem geographischen Gebiet Strahlung liefern und die Luftschnittstelle für die Endgeräte (110) bereitstellen, wobei mindestens einige der Endgeräte (110) einen Speicher umfassen, der eine Definition einer Zone speichert, die Teil des geographischen Gebiets ist und in der dem Nutzer eine standortabhängige Vergebührung und/oder standortabhängige Dienste geboten wird/werden, die sich von der Vergebührung und/oder den Diensten außerhalb der Zone unterscheidet bzw. unterscheiden, und wobei benachbarte Netzknoten in Netzknotengruppen gruppiert sind, wobei mindestens einigen der Netzknotengruppen Netzknotengruppen-Bezugsnummern zugewiesen sind und mindestens einigen der Netzknoten eine Netzknotenkennung zugewiesen ist, und wobei die im Endgerät (110) gespeicherte Definition einer Zone eine oder mehrere Netzknotengruppen-Bezugsnummern umfasst, wobei mindestens eine Stelle der Netzknotengruppen-Bezugsnummern durch einen Platzhalter ersetzt ist und/oder die im Endgerät (110) gespeicherte Definition einer Zone eine oder mehrere Netzknotenkennungen umfasst, wobei mindestens eine Stelle der Netzknotenkennungen durch einen Platzhalter ersetzt ist,
wobei das System eine zweite Datenbank, die eine Definition der Zone(n) für die Nutzer des Kommunikationssystems enthält, umfasst und Aktualisierungsmittel zum Aktualisieren des in den mindestens einigen der Endgeräten angeordneten Speichers, der die Definition einer Zone speichert, aufweist, **dadurch gekennzeichnet, dass** das Aktualisierungsmittel dafür ausgelegt ist, die zweite Datenbank bei einer vorab festgelegten Häufigkeit zu durchlaufen und an Endgeräte von Nutzern, die durch ein Mittel zum Setzen einer Aktualisierungsflagge in der zweiten Datenbank markiert sind, unaufgeforderte Aktualisierungen zu senden, und/oder dass das Aktualisierungsmittel dafür ausgelegt ist, Aktivität seitens des Endgeräts des Nutzers zu erkennen und an Endnutzer, die durch das Mittel zum Setzen einer Aktualisierungsflagge in der zweiten Datenbank markiert sind und die Aktivität aufweisen, eine unaufgeforderte Aktualisierung zu senden.

2. Kommunikationssystem nach Anspruch 1,
**dadurch gekennzeichnet, dass** die Definition einer Zone, die in dem Endgerät gespeichert ist, eine oder mehrere Netzknotengruppen-Bezugsnummern sowie eine oder mehrere Netzknotenkennungen umfasst, wobei mindestens einige der Stellen der Netzknotengruppen-Bezugsnummern durch Platzhalter ersetzt sind, und wobei mindestens einige der Stellen der Netzknotenkennungen durch Platzhalter ersetzt sind.

3. Kommunikationssystem nach Anspruch 2,
**dadurch gekennzeichnet, dass** benachbarte Netzknotengruppen Netzknotengruppen-Bezugsnummern mit gemeinsamen Werten und mit nicht gemeinsamen Werten aufweisen und dass die Definition einer Zone, die in dem Endgerät gespeichert ist, eine oder mehrere Netzknotengruppen-Bezugsnummern umfasst, wobei die nicht gemeinsamen Werte der Netzknotengruppen-Bezugsnummern durch Platzhalter ersetzt sind und/oder dass die Netzknotenkennung Stellen aufweist, die einen physischen Funknetzsender des Netzknotens bezeichnen.

4. Kommunikationssystem nach Anspruch 3,
**dadurch gekennzeichnet, dass** Netzknoten, denen der gleiche physische Funknetzsender zugeordnet ist, Netzknotenkennungen mit gemeinsamen Werten, die den physischen Funknetzsender kennzeichnen, und mit nicht gemeinsamen Werten aufweisen und dass die Definition einer Zone eine oder mehrere Netzknotenkennungen umfasst, wobei die nicht gemeinsamen Werte der Netzknotenkennungen durch Platzhalter ersetzt sind.

5. Kommunikationssystem nach einem der vorhergehenden Ansprüche,
**dadurch gekennzeichnet, dass** das System eine erste Datenbank umfasst, die ein physisches Standortattribut aller in dem Kommunikationsnetz residenten Netzknoten enthält, das dem Nutzer zusammen mit der zugeordneten Netzknotenkennung geboten wird.

6. Kommunikationssystem nach einem der vorhergehenden Ansprüche,
**dadurch gekennzeichnet, dass** das System eine erste Verarbeitungsvorrichtung umfasst, die dafür ausgelegt ist, alle Netzknoten zu ermitteln, die als die Zone versorgend eingestuft werden, wobei das System eine zweite Verarbeitungsvorrichtung umfasst, die dafür ausgelegt ist, eine Liste aller von der ersten Verarbeitungsvorrichtung ermittelten Netzknoten zu verschlüsseln und den Netzknotenkennungen und/oder den Netzknotengruppen-Bezugsnummern Platzhalter zuzuweisen, und wobei die zweite Verarbeitungsvorrichtung dafür ausgelegt ist, eine optimierte Standort-Kennzahl bereitzustellen, die Platzhalter für nicht gemeinsame Stellen sowie die Werte gemeinsamer Stellen der Netzknotenkennungen und/oder der Netzknotengruppen-Bezugsnummern der Netzknoten umfasst, die als die Zone versorgend eingestuft werden.

7. Kommunikationssystem nach einem der vorhergehenden Ansprüche,
**dadurch gekennzeichnet, dass** das System eine Auslösevorrichtung umfasst, die dafür ausgelegt ist, die zweite Verarbeitungsvorrichtung zu nutzen, um die Zone(n) für die Nutzer des Systems jedes Mal, wenn eine Änderung einer Netzknotentopologie vorgenommen wird, neu zu beurteilen, wobei das System vergleichende Mittel umfasst, die dafür ausgelegt sind, die Definition einer Zone, die in dem Endgerät gespeichert ist, mit der neu beurteilten Definition einer Zone, die von der zweiten Verarbeitungsvorrichtung bereitgestellt wird, zu vergleichen, und wobei die vergleichenden Mittel Teil der Auslösevorrichtung sind, und wobei das Kommunikationssystem mittels der Mittel zum Setzen einer Aktualisierungsflagge diejenigen Endgeräte markiert, bei denen der Vergleich einen Unterschied zwischen der Definition einer Zone, die in dem Endgerät gespeichert ist, und der neu beurteilten Definition einer Zone, die von der zweiten Verarbeitungsvorrichtung bereitgestellt wird, aufdeckte.

8. Kommunikationssystem nach einem der vorhergehenden Ansprüche,
**dadurch gekennzeichnet, dass** das System dafür ausgelegt ist, die Zone(n) für die Nutzer des Systems zum Zeitpunkt, da eine Aktualisierung an den Nutzer gesendet wird, neu zu beurteilen.

9. Kommunikationssystem nach einem der vorhergehenden Ansprüche,
**dadurch gekennzeichnet, dass** das Aktualisierungsmittel so ausgelegt ist, dass es Kenntnis von Aktualisierungen hat, die derzeit ablaufen, wobei das Aktualisierungsmittel dafür ausgelegt ist, vorherige noch unerledigte Aktualisierungen zurückzurufen oder zu stornieren und sie durch die jüngste Aktualisierung zu ersetzen.

10. Kommunikationssystem nach einem der vorhergehenden Ansprüche,
**dadurch gekennzeichnet, dass** die Endgeräte dafür ausgelegt sind, den Empfang einer Aktualisierung der gespeicherten Definition der Zone zu bestätigen, wobei das System dafür ausgelegt ist, die von dem Mittel zum Setzen einer Aktualisierungsflagge gesetzte Aktualisierungsflagge bei Empfang der Bestätigung seitens des Endgeräts zurückzusetzen.

11. Kommunikationssystem nach einem der vorhergehenden Ansprüche,
**dadurch gekennzeichnet, dass** das Aktualisierungsmittel dafür ausgelegt ist, dem Endgerät die Aktualisierung über eine OTAP zu liefern und dass das Endgerät mit Empfangsmitteln zum Empfangen der Aktualisierung und mit Verarbeitungsmitteln zum Verarbeiten der empfangenen Aktualisierung versehen ist, wobei das Trägermedium zum Senden der Aktualisierung SMS, GPRS oder USSD ist.

## Claims

1. Communication system for the provision of services to the user of the communication system by means of an air interface medium in a geographical region, wherein the communication system comprises network codes and terminals(110), wherein the network codes deliver radiation to the geographical region and provide the air interface for the terminals (110), wherein at least some of the terminals (110) comprise a memory store, which stores a definition of a zone which is part of the geographical region and in which the user is offered location-dependent charging and/or location-dependent services that differ(s) from the charging and/or services outside of the zone, and wherein adjacent network codes are grouped into network code groups, wherein network code group reference numbers are assigned to at least some of the network code groups and a network code identification is assigned to at least some of the network codes, and wherein the definition of a zone stored in the terminal (110) comprises one or more network code group reference numbers, wherein at least one position of the network code group reference numbers is replaced by a place marker and/or the definition of a zone stored in the terminal (110) comprises one or more network code identifications, wherein at least one position of the network code identifications is replaced by a place marker, wherein the system comprises a second database, which contains a definition of the zone(s) for the user of the communication system, and has updating means for updating the memory store that is arranged in at least some of the terminals, which stores the definition of a zone,
**characterised in that** the updating means is designed to pass through the second database at a predetermined level of frequency and to send updates to user terminals, which are selected by a means for applying an update alert in the second database, without being requested, and/or **in that** the updating means is designed to detect activity in the user terminal and to send updates to terminal users who are selected by a means for applying an update alert in the second database and who display signs of activity, without being requested.

2. Communication system according to claim 1,
**characterised in that** the definition of a zone stored in the terminal comprises one or more network code group reference numbers and one or more network code identifications, wherein at least some of the positions of the network code group reference numbers are replaced by place markers, and wherein at least some of the positions of the network code identifications are replaced by place markers.

3. Communication system according to claim 2,
**characterised in that** adjacent network code groups have network code group reference numbers with combined values and with non-combined values, and **in that** the definition of a zone stored in the terminal comprises one or more network code group reference numbers, wherein the non-combined values of the network code group reference numbers are replaced by place markers and/or **in that** the network code identification has positions that denote a physical radio network transmitter of the network code.

4. Communication system according to claim 3,
**characterised in that** the network codes, to which the same physical radio network transmitter is assigned, have network code identifications with combined values that denote the physical radio network transmitter and with non-combined values, and **in that** the definition of a zone comprises one or more network code identifications, wherein the non-combined values of the network code identifications are replaced by place markers.

5. Communication system according to one of the preceding claims,
**characterised in that** the system comprises a first database, which contains a physical location attribute of all the network codes present in the communication network, which is offered to the user along with the assigned network code identification.

6. Communication system according to one of the preceding claims,
**characterised in that** the system comprises a first processing device, which is designed to identify all network codes that are classified as accommodating the zone, wherein the system comprises a second processing device, which is designed to encrypt a list of all the network codes that are identified by the first processing device, and to assign place markers to the network code identifications and/or to the network code group reference numbers, and wherein the second processing device is designed to provide an optimised location classification number, which comprises the place markers for non-combined positions and the values of combined positions of the network code identifications and/or the network code group reference numbers of the network codes that are classified as accommodating the zone.

7. Communication system according to one of the preceding claims,
**characterised in that** the system comprises a release device that is designed to use the second processing device in order to re-evaluate the zone(s) for the system user every time a change is made to network code topology, wherein the system comprises comparative means that are designed to compare the definition of a zone that is stored in the terminal with the re-evaluated definition of a zone that is provided by the second processing device, and wherein the comparative means are part of the release device, and wherein the communication system selects each terminal using the means for applying an update alert, wherein the comparison exposes a difference between the definition of a zone that is stored in the terminal and the re-evaluated definition of a zone that is provided by the second processing device.

8. Communication system according to one of the preceding claims,
**characterised in that** the system is designed to re-evaluate the zone(s) for the system user at a point in time at which an update is sent to the user.

9. Communication system according to one of the preceding claims,
**characterised in that** the updating means is designed to be aware of updates that are currently running, wherein the updating means is designed to recall or cancel previous or pending updates and to replace them with the most recent update.

10. Communication system according to one of the preceding claims,
**characterised in that** the terminals are designed to confirm the receipt of an update to the stored definition of the zone, wherein the system is designed to reset the update alert that is applied by the means for applying an update alert when there is confirmation of receipt by the terminal.

11. Communication system according to one of the preceding claims,
**characterised in that** the updating means is designed to deliver the update to the terminal via OTA programming, and **in that** the terminal has receiving means for receiving the update and processing means for processing the received update added to it, wherein the carrier medium for sending the update is SMS, SPRS or USSD.

## Revendications

1. Système de communication destiné à la mise à disposition de services aux utilisateurs du système de communication par un milieu d'interface aérienne dans une région géographiques, le système de communication comprenant des noeuds de réseau et des postes terminaux (110), les noeuds de réseau livrant une radiation à la région géographique et l'interface aérienne pour les terminaux (110), au moins quelques-uns des terminaux (110) comportant une mémoire qui enregistre une définition d'une zone, qui est partie de la région géographique et dans laquelle sont offerts à l'utilisateur une tarification en fonction du site et/ou des services en fonction du site, qui diffèrent de la tarification et/ou des services en dehors de la zone, et des noeuds de réseau avoisinants étant groupés par groupes de noeuds de réseau, des numéros de référence de groupes de noeuds de réseau étant affectés au moins à quelques-uns des groupes de noeuds de réseau et un identifiant de noeud de réseau étant affecté au moins à quelques-uns des noeuds de réseau, et la définition d'une zone enregistrée dans le terminal (110) comportant un ou plusieurs numéros de référence de groupes de noeuds de réseau, au moins une position des numéros de référence de groupes de noeuds de réseau étant remplacée par un caractère de remplacement et/ou la définition d'une zone enregistrée dans le terminal (110) comprenant un ou plusieurs identifiants de noeuds de réseau, au moins une position des identifiants de noeuds de réseau étant remplacée par un caractère de remplacement,
le système comprenant une seconde banque de données qui comporte une définition de la zone ou des zones pour les utilisateurs du système de communication, et présente des moyens d'actualisation pour l'actualisation de la mémoire disposée dans au moins quelques-uns des terminaux, qui enregistre la définition d'une zone,
**caractérisé en ce que** le moyen d'actualisation est conçu pour parcourir la seconde banque de données lors d'une fréquence déterminée au préalable, et d'envoyer des actualisations non requises aux terminaux d'utilisateurs qui sont marqués par un moyen pour régler une bannière d'actualisation dans la deuxième banque de données, et/ou **en ce que** le moyen d'actualisation est conçu pour détecter une activité du côté du terminal de l'utilisateur et pour envoyer une actualisation non requise.aux utilisateurs finaux qui sont marqués dans la deuxième banque de données par le moyen pour régler une bannière d'actualisation et qui présentent l'activité.

2. Système de communication selon la revendication 1,
**caractérisé en ce que** la définition d'une zone qui est enregistrée dans le terminal comporte un ou plusieurs numéros de référence de groupes de noeuds de réseau ainsi qu'un ou plusieurs identifiants de noeuds de réseau, au moins quelques-unes des positions des numéros de référence de groupes de noeuds de réseau étant remplacées par des caractères de remplacement, et au moins quelques-unes des positions des identifiants de noeuds de réseau étant remplacées par des caractères de remplacement.

3. Système de communication selon la revendication 2,
**caractérisé en ce que** des groupes de noeuds de réseau avoisinants présentent des numéros de référence de groupes de noeuds de réseau avec des valeurs communes et avec des valeurs non communes et **en ce que** la définition d'une zone, qui est enregistrée dans le terminal comporte un ou plusieurs numéros de référence de groupes de noeuds de réseau, les valeurs non communes des numéros de référence de groupes de noeuds de réseau étant remplacées par des caractères de remplacement et/ou **en ce que** l'identifiant de noeud de réseau présente des positions qui désignent un émetteur physique de réseau radio du noeud de réseau.

4. Système de communication selon la revendication 3,
**caractérisé en ce que** des noeuds de réseau auxquels le même émetteur physique de réseau radio est affecté présentent des identifiants de noeud de réseau avec des valeurs communes qui caractérisent l'émetteur physique de réseau radio, et avec des valeurs non communes et **en ce que** la définition d'une zone comporte un ou plusieurs identifiants de noeud de réseau, les valeurs non communes des identifiants de noeuds de réseau étant remplacées par des caractères de remplacement.

5. Système de communication selon une quelconque des revendications précédentes,
**caractérisé en ce que** le système comporte une première banque de donnée qui contient un attribut de site physique de tous les noeuds de réseau résidents dans le réseau de communication, qui est proposé à l'utilisateur ensemble avec l'identifiant de noeud de réseau affecté.

6. Système de communication selon une quelconque des revendications précédentes,
**caractérisé en ce que** le système comporte un premier dispositif de traitement qui est conçu pour détecter tous les noeuds de réseau, qui sont classés comme desservant la zone, le système comportant un deuxième dispositif de traitement qui est conçu pour coder une liste de tous les noeuds de réseau détectés par le premier dispositif de traitement et pour affecter les identifiants de noeuds de réseau et/ou les numéros de référence de groupes de noeuds de réseau à des caractères de remplacement, et le deuxième dispositif de traitement étant conçu pour mettre à disposition un numéro identifiant optimisé de site, qui comporte des caractères de remplacement pour les positions non communes ainsi que les valeurs de positions communes des identifiants de noeuds de réseau et/ou des numéros de référence de groupes de noeuds de réseau des noeuds de réseau qui sont classés comme desservant la zone.

7. Système de communication selon une quelconque des revendications précédentes,
**caractérisé en ce que** le système comporte un dispositif de déclenchement qui est conçu pour utiliser le deuxième dispositif de traitement, afin de réévaluer la ou les zones pour l'utilisateur du système chaque fois qu'une modification d'une topologie de noeud de réseau est réalisée, le système comportant des moyens comparatifs qui sont conçus pour comparer la définition d'une zone qui est enregistrée dans le terminal avec la définition réévaluée d'une zone qui est mise à disposition par le second dispositif de traitement, et les moyens comparateurs faisant partie du dispositif de déclenchement, le système de communication marquant à l'aide des moyens pour régler une bannière d'actualisation les terminaux pour lesquels la comparaison a révélé une différence entre la définition d'une zone qui est enregistrée dans le terminal et la définition réévaluée d'une zone qui est mise à disposition par le deuxième dispositif de traitement.

8. Système de communication selon une quelconque des revendications précédentes,
**caractérisé en ce que** le système est conçu pour réévaluer la ou les zones pour les utilisateurs du système au moment où une actualisation est envoyée à l'utilisateur.

9. Système de communication selon une quelconque des revendications précédentes,
**caractérisé en ce que** le moyen d'actualisation est conçu de sorte qu'il a connaissance des actualisations qui s'effectuent actuellement, le moyen d'actualisation étant conçu pour rappeler ou annuler les actualisations précédentes encore non terminées et pour les remplacer par l'actualisation la plus récente.

10. Système de communication selon une quelconque des revendications précédentes,
**caractérisé en ce que** les terminaux sont conçus pour confirmer la réception d'une actualisation de la définition enregistrée de la zone, le système étant conçu pour réinitialiser la bannière d'actualisation réglée par le moyen pour régler une bannière d'actualisation à la réception de la confirmation du côté du terminal.

11. Système de communication selon une quelconque des revendications précédentes,
**caractérisé en ce que** le moyen d'actualisation est conçu pour livrer l'actualisation au terminal par l'intermédiaire d'un OTAP et **en ce que** le terminal est doté de moyens de réception destinés à recevoir l'actualisation et de moyens de traitement destinés à traiter l'actualisation reçue, le milieu de support pour l'envoi de l'actualisation étant SMS, GPRS ou USSD.
